# FASCICULE DE BREVET EUROPEEN

(11) **EP 2 708 466 B1**
(45) Date de publication et mention de la délivrance du brevet: **18.03.2015**
(21) Numéro de dépôt: 13004310.2
(22) Date de dépôt: 03.09.2013
(51) Int. Cl.: B64C 27/82, B64C 5/02, B64C 5/16

(54) **Moyen de stabilisation en tangage et aéronef à voilure tournante muni d'un tel moyen**
Nickstabilisierungsmittel und Drehflügler mit solchen Mitteln
Pitch stabilisation means and rotorcraft comprising such means

(30) Priorité: 17.09.2012 FR 1202464
(43) Date de publication de la demande: 19.03.2014
(73) Titulaire: Airbus Helicopters, 13725 Marignane Cedex (FR)
(72) Inventeur: Beroul, Frédéric, 13100 AIX EN Provence (FR)
(74) Mandataire: GPI & Associés

(56) Documents cités:
- EP-A1- 2 409 917
- WO-A2-2004/007282
- US-A- 3 902 688

## Description

La présente invention concerne un moyen de stabilisation en tangage, et un aéronef à voilure tournante muni d'un tel moyen de stabilisation en tangage pour notamment minimiser le phénomène de bosse d'assiette. L'invention se situe donc dans le domaine technique restreint des aéronefs sujets au phénomène de bosse d'assiette.

Classiquement, un hélicoptère comprend par exemple un fuselage s'étendant longitudinalement d'une extrémité avant vers une extrémité arrière de part et d'autre d'un plan antéropostérieur de symétrie, et selon une direction verticale d'une portion inférieure équipée d'un train d'atterrissage vers une portion supérieure munie d'un rotor principal de sustentation et de propulsion.

De plus, l'hélicoptère comporte un rotor arrière au niveau de son extrémité arrière. Le rotor arrière a notamment pour fonction de contrer le couple en lacet exercé par le rotor principal sur le fuselage. De plus, ce rotor arrière permet de contrôler les mouvements en lacet de l'hélicoptère.

Par ailleurs, un hélicoptère comprend parfois des surfaces stabilisatrices additionnelles. Par exemple, il est usuel d'équiper un hélicoptère d'une surface stabilisatrice de mouvements en lacet contenue par exemple dans la plan antéropostérieur pour s'opposer audit couple en lacet à grande vitesse d'avancement de l'aéronef.

Une telle surface stabilisatrice de mouvements en lacet est généralement dénommée « dérive ».

De même, l'hélicoptère comporte parfois un moyen de stabilisation de mouvements en tangage présentant une angulation dont la valeur absolue est comprise entre 0° et plus ou moins 90° avec ledit plan antéropostérieur. Ce moyen de stabilisation en tangage comporte par exemple deux surfaces stabilisatrices en tangage s'étendant symétriquement de part et d'autre dudit plan antéropostérieur.

On nomme parfois un tel moyen de stabilisation de mouvements en tangage « empennage horizontal » ou plus simplement « empennage » par la suite. Le terme « empennage » est d'autant plus usité que le moyen de stabilisation n'est pas nécessairement horizontal. L'expression « moyen de stabilisation en tangage » est aussi utilisée.

Un empennage peut comprendre au moins une surface aérodynamique traversant de part en part l'extrémité arrière de l'aéronef selon une direction transversale, ou au encore au moins une surface aérodynamique non traversante s'étendant transversalement à partir de cette extrémité arrière.

Le moyen de stabilisation en tangage est très efficace, son efficacité croissant conjointement avec la vitesse d'avancement de l'hélicoptère. De plus, on comprend qu'on maximise l'efficacité d'un moyen de stabilisation en tangage en maximisant sa surface alaire.

Cependant, l'écoulement d'air traversant le rotor principal d'un hélicoptère traditionnel en vol est défléchi vers le bas et vient dans certains cas de vol impacter le moyen de stabilisation en tangage, notamment en translation à basse vitesse voire en vol stationnaire. Cet écoulement d'air exerce alors des efforts sur le moyen de stabilisation en tangage que le pilote compense en manoeuvrant ses commandes de vol.

Toutefois, lorsque les conditions de vol varient, la déflection de l'écoulement d'air est aussi modifiée. Il en va donc de même des efforts exercés sur le moyen de stabilisation en tangage.

Ce phénomène est dénommé « bosse d'assiette » par l'homme du métier.

En phase de transition et par exemple entre 40 et 80 noeuds (kt), les efforts exercés par l'écoulement d'air traversant le rotor principal tendent principalement à faire déporter l'empennage et cabrer l'hélicoptère en impactant le moyen de stabilisation en tangage. Cette phase de vol est usuellement appelée « phase de transition » dans la mesure où elle se situe en général à basse vitesse entre une phase de vol en stationnaire et une phase de vol de croisière.

Pour équilibrer l'hélicoptère, le pilote doit alors utiliser son manche de commande de pas cyclique des pales du rotor principal pour diminuer le cabrage de cet hélicoptère.

La déportance est néfaste pour les performances de l'aéronef. De plus, le mouvement à cabrer de l'aéronef est néfaste pour la visibilité d'un pilote, d'autant plus lors d'une phase d'approche.

On comprend que l'optimisation du moyen de stabilisation en tangage réalisée en maximisant sa surface alaire accentue la bosse d'assiette.

Dès lors, il parait impossible d'utiliser un moyen de stabilisation en tangage ayant une grande surface alaire sur un hélicoptère sans induire une augmentation du phénomène de bosse d'assiette.

Pour y remédier, on connaît des moyens de stabilisation munis d'une surface aérodynamique de stabilisation fixe et d'une surface aérodynamique mobile. La position de la surface mobile par rapport à la surface de stabilisation fixe peut alors être contrôlée via des commandes de vol pour limiter le phénomène de bosse d'assiette.

On entend par « surface de stabilisation » un organe aérodynamique allongé, notamment de type empennage.

Bien qu'intéressante, cette architecture impose des commandes de vol induisant une augmentation de la masse de l'aéronef, ainsi qu'une complexité accrue de l'aéronef.

Une deuxième solution consiste à agencer un moyen de stabilisation en tangage d'un aéronef à voilure tournante en dehors du sillage de cette voilure tournante. Cependant, cette deuxième solution peut induire de fait une perte d'efficacité notable du moyen de stabilisation, et génère des contraintes d'implémentation.

Le document FR 2962972, qui décrit toutes les caractéristiques du préambule de la revendication 1 et est considéré l'état de la technique la plus proche, vise un aéronef à voilure tournante muni d'un fuselage s'étendant longitudinalement d'une extrémité avant vers une extrémité arrière, d'un moyen de stabilisation supérieur en tangage et d'au moins un moyen de stabilisation inférieur en tangage. Chaque moyen de stabilisation inférieur est agencé dans le sillage du moyen de stabilisation supérieur généré par un flux d'air traversant la voilure tournante en impactant un extrados d'un moyen de stabilisation supérieur.

L'arrière plan technologique inclut aussi le document FR 2966425 qui décrit un aéronef comprenant un empennage et un moyen de lutte contre un phénomène de flottement aéroélastique.

En outre, le document FR 2167249 présente un aéronef muni d'un empennage caudal en V.

Le document US 3902688 présente un aéronef muni d'un stabilisateur horizontal agencé en haut d'une dérive, et d'un stabilisateur horizontal agencé en bas de cette dérive.

On connaît aussi le document WO 2004/007282.

La présente invention a alors pour objet de proposer un moyen de stabilisation en tangage d'un aéronef à voilure tournante visant à minimiser le phénomène de bosse d'assiette.

Selon l'invention, un moyen de stabilisation en tangage est muni d'une surface de stabilisation supérieure et d'une surface de stabilisation inférieure. Dès lors, la surface de stabilisation supérieure étant placée dans un plan dit « plan supérieur », la surface de stabilisation inférieure étant placée dans un plan dit « plan inférieur », le plan supérieur surplombe le plan inférieur.

En outre, la surface de stabilisation supérieure est mobile en rotation autour d'un axe de rotation supérieur, la surface de stabilisation inférieure étant mobile en rotation autour d'un axe de rotation inférieur. Le moyen de stabilisation comporte un moyen de liaison pour qu'un mouvement rotatif d'une surface de stabilisation engendre un mouvement rotatif égal de l'autre surface de stabilisation, un foyer supérieur d'application de variation d'efforts de la surface de stabilisation supérieure étant agencé entre ledit axe de rotation supérieur et un bord d'attaque supérieur de la surface de stabilisation supérieure, un foyer inférieur d'application de variation d'efforts de la surface de stabilisation inférieure étant agencé entre un bord de fuite inférieur de la surface de stabilisation inférieure et l'axe de rotation inférieur.

On entend par « mouvements rotatifs égaux » deux mouvements rotatifs se produisant selon le même sens, voire selon la même amplitude.

Par conséquent, si la surface de stabilisation supérieure effectue une rotation selon un sens dextrorsum, le moyen de liaison induit une rotation de la surface de stabilisation inférieure selon un même sens et donc selon le sens dextrorsum.

Le moyen de liaison est alors un moyen de contrôle tendant à induire des mouvements rotatifs d'un même type des surfaces de stabilisation inférieure et supérieure.

Ainsi, ce moyen de liaison et l'emplacement des foyers aérodynamiques par rapport aux axes de rotation permettent qu'un mouvement rotatif de la surface de stabilisation inférieure engendre un même mouvement rotatif de la surface de stabilisation supérieure durant certaines phases de vol, et qu'un mouvement rotatif de la surface de stabilisation inférieure soit bloqué par l'absence d'un mouvement rotatif ou par un mouvement rotatif de moindre amplitude de la surface de stabilisation supérieure durant d'autres phases de vol.

Le dimensionnement des surfaces de stabilisation et/ou du moyen de liaison est réalisé pour annuler voir minimiser un moment de rotation exercé sur les surfaces de stabilisation par une mise en incidence de l'ensemble de ces surfaces de stabilisation.

En revanche en cas de mise en incidence différentielle, le moment d'ensemble devient notable et fait pivoter les deux surfaces de stabilisation.

C'est le cas durant une phase de vol de transition se produisant entre un seuil de vitesse minimal et un seuil de vitesse maximal, par exemple respectivement de l'ordre de 40 noeuds et de 80 noeuds. La phase de vol de transition intervient dès lors entre une phase de vol stationnaire et une phase de vol de croisière par exemple.

Ces seuils de vitesse sont des seuils de vitesse d'avancement de l'aéronef à voilure tournante muni du moyen de stabilisation en tangage.

En effet, lors d'une phase de vol de transition, la surface de stabilisation inférieure se trouve dans le sillage de la voilure tournante.

Or, la surface de stabilisation supérieure est disposée dans un plan supérieur à l'aplomb de la surface de stabilisation inférieure. Cette surface de stabilisation supérieure est donc décalée verticalement par rapport à la surface de stabilisation inférieure. Cette surface de stabilisation supérieure peut aussi être décalée longitudinalement par rapport à la surface de stabilisation inférieure, à savoir selon la direction longitudinale de l'aéronef muni de l'invention.

Par conséquent, durant un vol de transition, la surface de stabilisation est soit à l'écart dudit sillage de la voilure tournante, soit impactée par un flux d'air présentant une incidence plus faible que le flux d'air impactant la surface de stabilisation inférieure.

Dans cette phase de vol de transition, le flux d'air provenant de la voilure tournante tend à induire une rotation de la surface de stabilisation inférieure. Par contre, ce flux d'air n'impacte pas ou impacte avec une incidence moindre la surface de stabilisation supérieure.

Le flux d'air génère alors un moment de rotation au niveau du foyer inférieur qui est plus élevé que le moment de rotation s'appliquant sur le foyer supérieur.

Le moyen de liaison permet alors une rotation de la surface de stabilisation inférieure, et par suite une rotation de la surface de stabilisation supérieure. La surface de stabilisation inférieure s'oriente selon l'invention naturellement en fonction de l'incidence du flux d'air l'impactant.

Par contre, durant une phase de vol de croisière chaque surface de stabilisation est impactée par un flux d'air sensiblement identique. Compte tenu de l'emplacement des foyers inférieur et supérieur par rapport à l'articulation de tangage des surfaces de stabilisation, les surfaces de stabilisation tendent à effectuer des rotations antagonistes et de même amplitude qui s'annulent au travers du moyen de liaison. Dès lors, les surfaces de stabilisation demeurent sensiblement dans une position donnée.

La surface de stabilisation inférieure a alors pour but de stabiliser le mouvement de tangage d'un aéronef, la surface de stabilisation supérieure ayant pour fonction première de positionner la surface de stabilisation inférieure de manière adéquate via le moyen de liaison. La surface de stabilisation inférieure peut alors comprendre une surface alaire sensiblement supérieure à la surface alaire de la surface de stabilisation supérieure

On entend par « surface alaire » d'une surface de stabilisation l'aire de cette surface de stabilisation projetée sur un plan, la partie de la surface de stabilisation présente dans un fuselage étant incluse. On peut se référer à la littérature pour obtenir des informations complémentaires relatives aux surfaces alaires.

Le terme « surface » est synonyme du terme « aire » dans l'expression « surface alaire », alors que ce terme « surface » est synonyme de l'expression « organe aérodynamique » dans l'expression « surface de stabilisation ».

Ces caractéristiques tendent alors à diminuer le phénomène de bosse d'assiette, en permettant une orientation des surfaces de stabilisation durant la phase de vol de transition.

Le moyen de stabilisation peut de plus comporter une ou plusieurs des caractéristiques additionnelles qui suivent.

En effet, le moyen de stabilisation peut comporter un moyen de mobilité supérieur autorisant un mouvement rotatif de ladite surface de stabilisation supérieure autour d'un axe de rotation supérieur, et un moyen de mobilité inférieur autorisant un mouvement rotatif de ladite surface de stabilisation inférieure autour d'un axe de rotation inférieur.

Chaque surface de stabilisation comporte donc un moyen de mobilité afin de pouvoir effectuer une rotation par rapport à un fuselage d'un aéronef.

On peut se référer aux technologies connues pour articuler en rotation une surface de stabilisation à la structure d'un aéronef.

Au moins un moyen de mobilité peut comporter un arbre solidaire de la surface de stabilisation correspondante, cet arbre étant apte à être articulé à un fuselage d'aéronef.

Par ailleurs, au moins un moyen de mobilité peut comporter un moyen de rappel de la surface de stabilisation correspondante tendant à maintenir cette surface de stabilisation dans une position stable.

Un tel moyen de rappel permet d'éviter qu'un événement transitoire violent (rafale de vent, changement brusque de direction...) entraîne une rotation indue, par exemple une rotation de la surface de sustentation supérieure provoquant une rotation de la surface de sustentation inférieure.

De plus, ce moyen de rappel tend à positionner les surfaces de stabilisation dans une position définie par le constructeur durant un vol de croisière.

En effet, durant une phase de vol transitoire, les surfaces de stabilisation peuvent pivoter par rapport à ladite position.

Par contre, lorsque l'aéronef atteint une phase de vol de croisière, le moyen de rappel tend à ramener les surfaces de stabilisation dans ladite position.

Ce moyen de rappel comporte éventuellement un moyen de raidissement présentant une raideur angulaire prédéterminée, de l'ordre de un newton-mètre par degré par exemple.

Ce moyen de rappel peut comporter un élément amortissant pour limiter, par exemple, les effets dynamiques provoqués par les tourbillons émis par les pales d'une voilure tournante.

Par ailleurs, le moyen de stabilisation peut comporter au moins une butée pour limiter une rotation à piquer ou à cabrer de la surface de stabilisation inférieure.

Une telle butée peut être implémentée pour éviter le décrochage de la surface de stabilisation supérieure par exemple qui rendrait le contrôle moins efficace.

Selon un premier mode de réalisation, le moyen de liaison est un moyen mécanique.

Ce moyen de liaison inclut au moins une liaison mécanique articulée à la surface de stabilisation inférieure et à la surface de stabilisation supérieure.

Cette liaison mécanique peut se situer à égale distance de l'axe de rotation supérieur et de l'axe de rotation inférieur.

La liaison comporte par exemple au moins une bielle coopérant avec une articulation supérieure reliée à la surface de stabilisation supérieure, et avec une articulation inférieure reliée à la surface de stabilisation inférieure. La distance séparant cette articulation supérieure de l'axe supérieur est alors égale à la distance séparant cette articulation inférieure de l'axe inférieure.

Selon une variante, l'axe de rotation supérieur peut être agencé entre un foyer supérieur d'application de variation d'efforts de la surface de stabilisation supérieure et un bord de fuite supérieur de la surface de stabilisation supérieure, la surface de stabilisation supérieure comprenant une portion intermédiaire s'étendant en corde du foyer supérieur à l'axe de rotation supérieur et une portion arrière supérieure s'étendant en corde de l'axe de rotation supérieur au bord de fuite supérieur,

Par contre, l'axe de rotation inférieur est agencé entre un foyer inférieur d'application de variation d'efforts de la surface de stabilisation inférieure et un bord de fuite inférieur de la surface de stabilisation inférieure, ladite surface de stabilisation inférieure comprenant une portion avant inférieure s'étendant en corde d'un bord d'attaque inférieur de la surface de stabilisation inférieure à l'axe de rotation inférieur puis un tronçon intermédiaire s'étendant en corde de l'axe de rotation inférieur au foyer inférieur et une portion arrière inférieure s'étendant en corde dudit foyer inférieur au bord de fuite inférieur.

Ainsi, au regard d'un flux d'air impactant chaque surface de sustentation, l'axe de rotation de la surface de stabilisation supérieure est placé en aval du foyer supérieur d'application d'efforts de cette surface de stabilisation supérieure. A l'inverse, l'axe de rotation de la surface de stabilisation inférieure est placé en amont du foyer inférieur d'application d'efforts de cette surface de stabilisation inférieure.

Dès lors, le moyen d'asservissement peut inclure une première liaison mécanique reliant la portion avant inférieure à la portion intermédiaire, et une deuxième liaison mécanique reliant la portion arrière inférieure à la portion arrière supérieure.

Un flux d'air impactant les surfaces de stabilisation avec la même incidence tend donc à induire des mouvements rotatifs égaux de ces surfaces de stabilisation.

Chaque liaison mécanique peut comporter des moyens usuels, tels que des bielles, des câbles, des moyens de renvoi etc...

Cette réalisation est relativement simple, et autorise un ajustement automatique de la position des surfaces de stabilisation.

Selon une variante, l'axe de rotation supérieur est à l'aplomb de l'axe de rotation inférieur.

Cette variante permet par exemple de simplifier les moyens de liaison.

De plus, la première liaison peut être liée au bord d'attaque inférieur, et/ou la deuxième liaison est liée au bord de fuite supérieur pour maximiser leur efficacité.

Selon une réalisation :
- l'axe de rotation supérieur est agencé entre un foyer supérieur d'application de variation d'efforts sur la surface de stabilisation supérieure et un bord de fuite supérieur de la surface de stabilisation supérieure, cet axe de rotation supérieur étant situé à une première distance du foyer supérieur,
- l'axe de rotation inférieur est agencé entre un foyer inférieur d'application de variation d'efforts sur la surface de stabilisation inférieure et un bord d'attaque inférieur de la surface de stabilisation inférieure, cet axe de rotation inférieur étant situé à une deuxième distance du foyer inférieur,
- la surface de stabilisation supérieure présente une première surface alaire, et la surface de stabilisation inférieure présente une deuxième surface alaire.
- un premier quotient de la première distance et de la deuxième distance est égal à un deuxième quotient de la deuxième surface alaire et de la première surface alaire.

Par conséquent, une surface de sustentation supérieure présentant une surface alaire réduite peut empêcher une rotation d'une surface de sustentation inférieure présentant une surface alaire importante, en présence d'un flux d'air présentant des incidences équivalentes par rapport à ces surfaces.

Ce premier quotient est par exemple compris entre 2 et 10.

Selon un deuxième mode de réalisation, le moyen de liaison inclut un dispositif électronique comprenant par exemple des capteurs, des moteurs électriques, un équipement électronique de gestion des efforts et de commande permettant de respecter les principes de blocage et liberté de pivotement du dispositif selon l'invention

En outre, l'invention vise un aéronef muni d'un fuselage s'étendant longitudinalement d'un nez vers une extrémité arrière. Cet aéronef comporte une voilure tournante portée par le fuselage entre le nez et l'extrémité arrière, l'aéronef ayant un moyen de stabilisation porté par le fuselage entre l'extrémité arrière et la voilure tournante.

Cet aéronef peut être un hélicoptère, ou tout autre type de giravion. Par exemple, l'aéronef peut comporter des surfaces portantes et un système de propulsion, ou encore être de type convertible.

Le moyen de stabilisation est alors un moyen de stabilisation selon l'invention du type décrit précédemment.

De plus, chaque surface de stabilisation est éventuellement indifféremment soit traversante en traversant latéralement de part en part le fuselage, soit non traversante en s'étendant latéralement à partir du fuselage.

Chaque surface de stabilisation peut être agencée sur une poutre de queue du fuselage, voire sur au moins une dérive de ce fuselage.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention,
- les figures 2 et 3, des aéronefs selon des variantes d'agencement des surfaces de stabilisation,
- la figure 4, une première variante d'un mode de réalisation mécanique de l'invention,
- la figure 5, une deuxième variante d'un mode de réalisation mécanique de l'invention, et
- la figure 6, une vue schématisant un moyen de rappel.

Les éléments présents dans plusieurs figures distinctes sont affectés d'une seule et même référence.

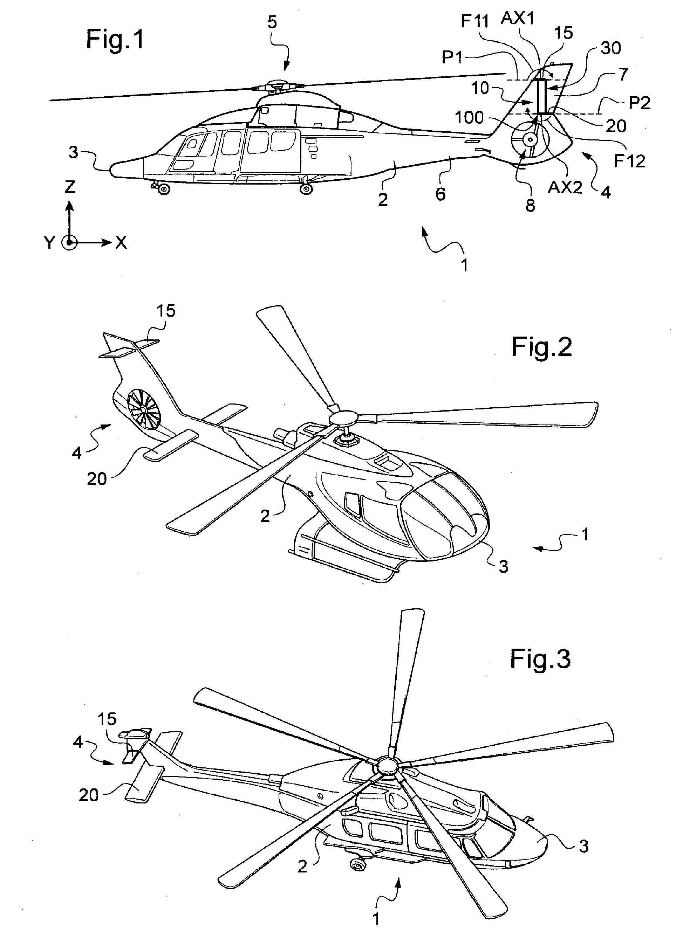

On note que trois directions X, Y et Z orthogonales les unes par rapport aux autres sont représentées sur la figure 1.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La figure 1 présente un aéronef 1 selon l'invention.

Cet aéronef comporte un fuselage 2 s'étendant longitudinalement d'un nez 3 vers une extrémité arrière 4, transversalement d'un flanc gauche vers un flanc droit.

De plus, le fuselage s'étend en élévation d'une partie basse comprenant un train d'atterrissage vers une partie haute portant une voilure tournante 5.

Le fuselage 2 peut comporter une poutre de queue 6 prolongée vers l'extrémité arrière 4 par une dérive 7. L'aéronef 1 peut alors posséder un rotor arrière 8 qui est fixé à la dérive 7, tel qu'un rotor caréné par exemple.

Cet aéronef 1 est par ailleurs muni d'un moyen de stabilisation 10 des mouvements en tangage. Ce moyen de stabilisation 10 est alors porté par le fuselage 2, entre le nez 3 et l'extrémité arrière 4. Plus particulièrement, le moyen de stabilisation 10 est agencé entre la voilure tournante 5 et l'extrémité arrière 4

Le moyen de stabilisation 10 inclut deux surfaces de stabilisation.

Chaque surface de stabilisation comprend un organe aérodynamique s'étendant transversalement par rapport au fuselage 2. Plus précisément, chaque surface de stabilisation peut s'étendre latéralement d'un côté de l'aéronef, voire s'étendre des deux côtés de l'aéronef de part et d'autre de l'aéronef.

Chaque surface de stabilisation est alors indifféremment soit traversante en traversant latéralement de part en part le fuselage 2, soit non traversante en s'étendant latéralement à partir dudit fuselage.

Les deux surfaces de stabilisation représentées comprennent en outre au moins un tronçon aérodynamique s'étendant du même côté de l'aéronef. Cependant, une surface de stabilisation peut s'étendre d'un côté de l'aéronef, l'autre surface de stabilisation s'étendant de l'autre côté de l'aéronef.

Chaque surface de stabilisation peut par ailleurs présenter un angle aigu par rapport au fuselage 2, ou encore être sensiblement perpendiculaire à ce fuselage.

Les deux surfaces de stabilisation sont respectivement sensiblement agencées respectivement dans un plan supérieur P1 et un plan inférieur P2, le plan supérieur étant de fait à l'aplomb du plan inférieur.

Ainsi, la surface de stabilisation présente dans le plan supérieur est dite « surface de stabilisation supérieure 15 ». De même, la surface de stabilisation présente dans le plan inférieur est dite « surface de stabilisation inférieure 20 ».

La surface de stabilisation supérieure 15 et la surface de stabilisation inférieure 20 sont donc décalées en élévation. La surface de stabilisation supérieure 15 et la surface de stabilisation inférieure 20 peuvent de plus être décalées longitudinalement.

En effet, selon l'exemple de la figure 1, la surface de stabilisation supérieure 15 et la surface de stabilisation inférieure 20 sont agencées sur la dérive 4. Le bord d'attaque de la surface stabilisation supérieure 15 est alors en amont du bord d'attaque de la surface stabilisation inférieure 20 selon le sens d'avancement de l'aéronef.

Par contre, selon la réalisation de la figure 2, le moyen de stabilisation comporte une surface de stabilisation inférieure 20 traversant la poutre de queue, et une surface de stabilisation supérieure 15 traversant la dérive de l'aéronef.

Selon la réalisation de la figure 3, le moyen de stabilisation comporte une surface de stabilisation inférieure 20 traversant la dérive de l'aéronef, et une surface de stabilisation supérieure 15 non traversante s'étendant du côté droit de l'aéronef vers l'extérieur. Le bord d'attaque de la surface stabilisation supérieure 15 est de plus en aval du bord d'attaque de la surface stabilisation inférieure 20 selon le sens d'avancement de l'aéronef.

D'autres réalisations sont bien sûrs envisageables.

Indépendamment de la variante, la surface de stabilisation supérieure 15 et la surface de stabilisation inférieure 20 sont donc décalées en élévation et longitudinalement.

L'emplacement de la surface de stabilisation supérieure 15 peut être choisi afin que cette surface de stabilisation supérieure 15 soit impactée durant la phase de vol de transition par un flux d'air présentant une déflection moindre par rapport au flux d'air impactant la surface de stabilisation inférieure 20. La surface de stabilisation supérieure 15 peut à l'extrême être agencée en dehors du sillage aérodynamique du rotor de la voilure tournante 5.

Par ailleurs, la surface de stabilisation supérieure 15 est mobile en rotation autour d'un axe de rotation supérieur AX1, la surface de stabilisation inférieure 20 étant mobile en rotation autour d'un axe de rotation inférieur AX2.

Dès lors, le moyen de stabilisation 10 est équipé d'un moyen de liaison 30 pour qu'un mouvement rotatif d'une surface de stabilisation engendre un mouvement rotatif équivalent de l'autre surface de stabilisation

A titre d'exemple illustratif, un mouvement rotatif F11 selon le sens dextrorsum de la surface de stabilisation supérieure 15 induit un mouvement rotatif F12 selon le sens dextrorsum de la surface de stabilisation inférieure 20 par le biais du moyen de liaison 30.

Le moyen de stabilisation est alors dimensionné pour que les surfaces de stabilisation inférieure et supérieure tendent à effectuer des mouvements rotatifs antagonistes d'une même amplitude lorsque ces surfaces de stabilisation inférieure et supérieure sont impactées par un même flux d'air. La présence du moyen de liaison neutralise alors la rotation des surfaces de stabilisation inférieure et supérieure

Par contre, durant une phase de vol transitoire, le flux d'air incident impactant la surface de stabilisation inférieure 20 peut entraîner une rotation de cette surface de stabilisation inférieure 20.

Ce flux d'air incident impactant la surface de stabilisation supérieure 15 avec une incidence moindre, le mouvement rotatif antagoniste de la surface de stabilisation supérieure 15 ne permet pas d'empêcher la rotation de la surface de stabilisation inférieure 20.

La surface de stabilisation inférieure 20 effectue alors un mouvement rotatif pour se positionner de manière optimisée. La surface de stabilisation supérieure effectue dans le même temps un mouvement égal au mouvement de rotation de la surface de stabilisation inférieure 20.

Eventuellement, le moyen de stabilisation peut comporter au moins une butée 100 pour limiter une rotation à piquer ou à cabrer de la surface de stabilisation inférieure. Par exemple, une butée 100 est utilisée pour limiter une rotation à cabrer de la surface de stabilisation inférieure.

Par contre, durant une phase de vol de croisière, les surfaces de stabilisation n'effectuent pas un mouvement rotatif. La surface de stabilisation inférieure tend en effet à effectuer un mouvement rotatif qui est de fait contrecarré par le mouvement rotatif antagoniste que la surface de stabilisation supérieure tend à effectuer.

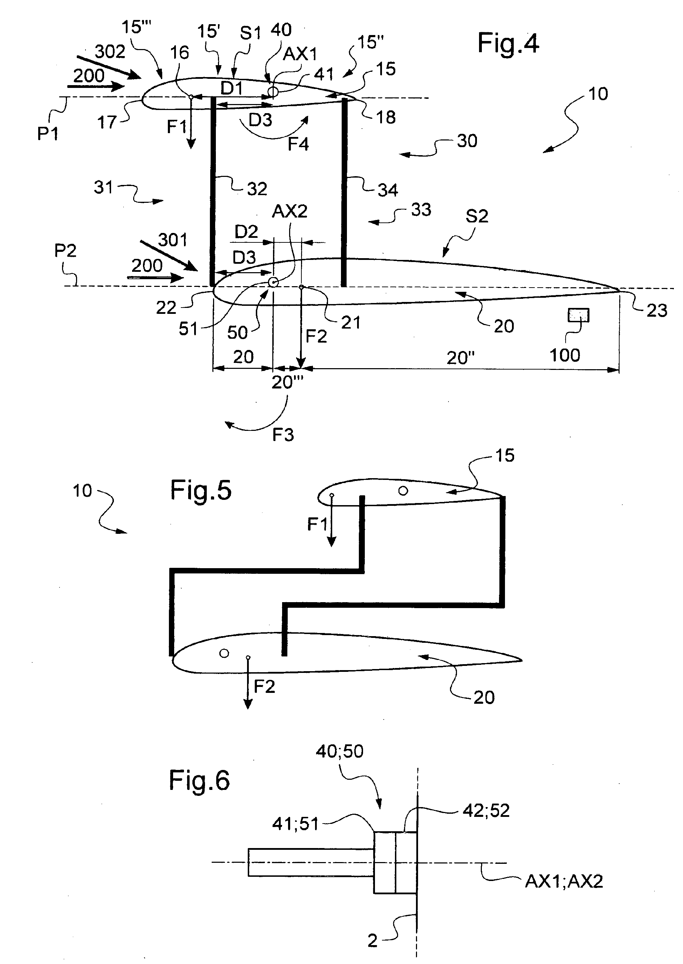

En référence à la figure 4, le moyen de stabilisation peut comporter un moyen de mobilité supérieur 40 autorisant un mouvement rotatif de la surface de stabilisation supérieure 15 autour de l'axe de rotation supérieur AX1. De même, un moyen de mobilité inférieur 50 autorise un mouvement rotatif de la surface de stabilisation inférieure 20 autour d'un axe de rotation inférieur AX2.

Par exemple, au moins un moyen de mobilité comporte un arbre 41, 51 coaxial avec l'axe de rotation correspondant. Chaque arbre est alors solidaire de la surface de stabilisation correspondante, et articulé au fuselage 2 de l'aéronef.

En référence à la figure 6, chaque moyen de mobilité 40, 50 peut comporter un moyen de rappel 42, 52 de la surface de stabilisation correspondante.

Chaque moyen de rappel tend à maintenir cette surface de stabilisation dans une position stable. Cette position stable peut être la position à atteindre durant une phase de vol de croisière.

Chaque moyen de rappel 42, 52 comporte éventuellement un moyen de raidissement présentant une raideur angulaire prédéterminée, tel qu'un moyen de raidissement en élastomère par exemple.

Chaque moyen de rappel 42, 52 comporte éventuellement un moyen d'amortissement (résiduel si le raidissement est effectué par un élastomère ou additionnel).

Par ailleurs, le moyen de liaison peut être un moyen électronique.

Cependant, en référence à la figure 4, le moyen de liaison peut être un moyen mécanique.

Indépendamment de la variante, la surface de sustentation inférieure 20 s'étend parallèlement à l'axe longitudinal de l'aéronef d'un bord d'attaque 22 à un bord de fuite 23. Le bord d'attaque est dénommé par commodité « bord d'attaque inférieur », alors que le bord de fuite est dénommé par commodité « bord de fuite inférieur ».

Classiquement, les variations d'efforts générés par la surface de sustentation inférieure s'appliquent en un foyer aérodynamique dénommé « foyer inférieur 21 ».

De même, la surface de sustentation supérieure 15 s'étend parallèlement à l'axe longitudinal de l'aéronef d'un bord d'attaque 17 à un bord de fuite 18. Le bord d'attaque est dénommé par commodité « bord d'attaque supérieur », alors que le bord de fuite est dénommé par commodité « bord de fuite supérieur ».

Classiquement, les efforts générés par la surface de sustentation inférieure s'applique en un foyer dénommé « foyer supérieur 16 ».

Selon la variante de la figure 4, l'axe de rotation supérieur AX1 est agencé entre le foyer supérieur 16 d'application d'efforts de la surface de stabilisation supérieure 15 et le bord de fuite supérieur 17.

La surface de stabilisation supérieure 15 comporte alors successivement du bord d'attaque supérieur 17 vers le bord de fuite 18 : un premier tronçon dit « portion avant supérieure 15" » entre le bord d'attaque supérieur 17 et le foyer supérieur 16, un deuxième tronçon dit « portion intermédiaire 15' » s'étendant en corde du foyer supérieur 16 à l'axe de rotation supérieur AX1, puis un troisième tronçon dit « portion arrière supérieure 15" » s'étendant en corde de l'axe de rotation supérieur AX1 au bord de fuite supérieur 18.

En outre, l'axe de rotation inférieur AX2 est agencé entre un foyer inférieur 21 de variation d'efforts de la surface de stabilisation inférieure 20 et le bord d'attaque inférieur 22.

La surface de stabilisation inférieure 20 comporte alors successivement du bord d'attaque inférieur 22 vers le bord de fuite inférieur 23 : un premier tronçon dit « portion avant inférieure 20' » s'étendant en corde d'un bord d'attaque inférieur 22 à l'axe de rotation inférieur AX2, puis un deuxième tronçon dit « tronçon intermédiaire 20"' » s'étendant en corde de l'axe de rotation inférieur AX2 au foyer inférieur 21, puis un troisième tronçon dit « portion arrière inférieure 20" » s'étendant en corde du foyer inférieur 21 au bord de fuite supérieur 18.

Le moyen de liaison 30 inclut selon une réalisation mécanique au moins une liaison mécanique 31, 33 qui est articulée à la surface de stabilisation inférieure 20 et à la surface de stabilisation supérieure 15.

Chaque liaison mécanique se situe à égale distance D3, D4 de l'axe de rotation supérieur AX1 et de l'axe de rotation inférieur AX2.

Selon l'exemple représenté, une première liaison mécanique 31 relie la portion avant inférieure 20' à la portion intermédiaire 15'. De plus, une deuxième liaison mécanique 33 relie la portion arrière inférieure 20" à la portion arrière supérieure 15".

Par exemple, la première liaison 31 est liée au bord d'attaque inférieur 22. En outre, la deuxième liaison 33 est liée au bord de fuite supérieur 18.

Dans ce contexte, l'emplacement des foyers aérodynamiques par rapport aux axes de rotation tend à induire des rotations antagonistes des surfaces de stabilisation sous l'effet d'un même flux d'air. Lorsque la surface de stabilisation inférieure est impactée par un flux d'air, la surface de stabilisation inférieure est soumise à une variation d'effort inférieur F2 s'appliquant au foyer inférieur 21 et tendant à induire une première rotation F3.

De même, lorsque la surface de stabilisation supérieure est impactée par un flux d'air, cette surface de stabilisation supérieure est soumise à une variation d'effort supérieur F1 dirigé selon le même sens que la variation d'effort inférieur F2. Cette variation d'effort supérieur F1 s'applique au foyer supérieur 16 et tend à induire une deuxième rotation F4 antagoniste à la première rotation F3.

Ces rotations antagonistes résultent du fait que le foyer aérodynamique 16 de la surface se stabilisation supérieure est situé entre le bord d'attaque et l'axe de rotation de cette surface se stabilisation supérieur, alors que le foyer aérodynamique 21 de la surface se stabilisation inférieure est situé entre l'axe de rotation et le bord de fuite de cette surface se stabilisation supérieur.

Toutefois, si la première rotation et la deuxième rotation ont la même amplitude, le moyen de liaison les neutralise automatiquement, une rotation annulant l'autre rotation.

A cet effet, l'axe de rotation supérieur AX1 peut être situé à une première distance D1 du foyer supérieur 16, l'axe de rotation inférieur AX2 étant situé à une deuxième distance D2 du foyer inférieur 21.

Or, la surface de stabilisation supérieure 15 présente une première surface alaire S1, et la surface de stabilisation inférieure 20 présente une deuxième surface alaire S2. La deuxième surface alaire S2 peut être plus importante que la première surface alaire S1.

Dès lors, un premier quotient de la première distance D1 et de la deuxième distance D2 peut être égal à un deuxième quotient de la deuxième surface alaire S2 et de la première surface alaire S1.

Par suite, lorsque les deux surfaces de stabilisation sont soumises à deux flux d'air 200 présentant une même incidence, la surface de stabilisation supérieure 15 empêche la rotation de la surface de stabilisation inférieure par le biais du moyen de liaison.

Par contre, durant une phase de vol de transition, les deux surfaces de stabilisation sont soumises à deux flux d'air 301, 302 présentant des incidences distinctes. A l'extrême, la surface de stabilisation supérieure 15 peut se trouver en dehors du sillage de la voilure tournante.

Dès lors, le moment correspondant à la rotation de la surface de stabilisation inférieure devient supérieur au moment correspondant à la rotation de la surface de stabilisation supérieure. Les surfaces de stabilisation inférieure et supérieure effectuent alors des mouvements rotatifs égaux.

Selon la variante de la figure 4, l'axe de rotation supérieur AX1 peut être à l'aplomb de l'axe de rotation inférieur AX2.

Ainsi chaque liaison mécanique peut être réalisée simplement, sans nécessiter des moyens de renvoi par exemple. Cette variante peut s'appliquer à l'exemple de la figure 1 notamment.

Par contre, l'axe de rotation supérieur AX1 peut être décalé longitudinalement par rapport à l'axe de rotation inférieur AX2 selon la variante de la figure 5. Cette variante peut s'appliquer aux exemples des figures 2 et 3.

Dès lors, chaque liaison mécanique peut comprendre une pluralité de tronçons, et des moyens de renvoi par exemple

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moyen de stabilisation (10) en tangage muni d'une surface de stabilisation supérieure (15) et d'une surface de stabilisation inférieure (20), ladite surface de stabilisation supérieure (15) étant placée dans un plan supérieur (P1), ladite surface de stabilisation inférieure (20) étant placée dans un plan inférieur (P2), le plan supérieur (P1) surplombant le plan inférieur (P2),
**caractérisé en ce que** la surface de stabilisation supérieure (15) est mobile en rotation autour d'un axe de rotation supérieur (AX1), ladite surface de stabilisation inférieure (20) étant mobile en rotation autour d'un axe de rotation inférieur (AX2), le moyen de stabilisation (10) ayant un moyen de liaison (30) pour qu'un mouvement rotatif d'une surface de stabilisation engendre un mouvement rotatif égal de l'autre surface de stabilisation, un foyer supérieur (16) d'application de variation d'efforts de la surface de stabilisation supérieure (15) étant agencé entre ledit axe de rotation supérieur (AX1) et un bord d'attaque supérieur (17) de la surface de stabilisation supérieure (15), un foyer inférieur (21) d'application de variation d'efforts de la surface de stabilisation inférieure (20) étant agencé entre un bord de fuite inférieur (23) de la surface de stabilisation inférieure (20) et l'axe de rotation inférieur (AX2).

2. Moyen de stabilisation selon la revendication 1,
**caractérisé en ce que** le moyen de stabilisation comporte un moyen de mobilité supérieur (40) autorisant un mouvement rotatif de ladite surface de stabilisation supérieure (15) autour d'un axe de rotation supérieur (AX1), et un moyen de mobilité inférieur (50) autorisant un mouvement rotatif de ladite surface de stabilisation inférieure (20) autour d'un axe de rotation inférieur (AX2).

3. Moyen de stabilisation selon la revendication 2,
**caractérisé en ce qu'**au moins un moyen de mobilité comporte un arbre (41, 51) solidaire de la surface de stabilisation correspondante, ledit arbre étant apte à être articulé à un fuselage (2) d'aéronef.

4. Moyen de stabilisation selon la revendication 2,
**caractérisé en ce qu'**au moins un moyen de mobilité (40, 50) comporte un moyen de rappel (42, 52) de la surface de stabilisation correspondante tendant à maintenir cette surface de stabilisation dans une position stable.

5. Moyen de stabilisation selon la revendication 4,
**caractérisé en ce que** ledit moyen de rappel (42, 52) comporte un moyen de raidissement présentant une raideur angulaire prédéterminée.

6. Moyen de stabilisation selon l'une quelconque des revendications 1 à 5,
**caractérisé en ce que** ledit moyen de liaison (30) inclut au moins une liaison mécanique articulée à la surface de stabilisation inférieure et à la surface de stabilisation supérieure.

7. Moyen de stabilisation selon la revendication 6,
**caractérisé en ce que** ladite liaison mécanique se situe à égale distance de l'axe de rotation supérieur et de l'axe de rotation inférieur.

8. Moyen de stabilisation selon l'une quelconque des revendications 1 à 7,
**caractérisé en ce que** :
- ledit axe de rotation supérieur (AX1) est agencé entre le foyer supérieur (16) d'application de variation d'efforts de la surface de stabilisation supérieure (15) et un bord de fuite supérieur (17) de la surface de stabilisation supérieure (15), ladite surface de stabilisation supérieure (15) comprenant une portion intermédiaire (15') s'étendant en corde dudit foyer supérieur (16) au dit axe de rotation supérieur (AX1) et une portion arrière supérieure (15") s'étendant en corde dudit axe de rotation supérieur (AX1) au bord de fuite supérieur (18),
- ledit axe de rotation inférieur (AX2) est agencé entre le foyer inférieur (21) d'application de variation d'efforts de la surface de stabilisation inférieure (20) et un bord d'attaque inférieur (22) de la surface de stabilisation inférieure (20), ladite surface de stabilisation inférieure (20) comprenant une portion avant inférieure (20') s'étendant en corde d'un bord d'attaque inférieur (22) de la surface de stabilisation inférieure (20) à l'axe de rotation inférieur (AX2) puis un tronçon intermédiaire (20"') s'étendant en corde de l'axe de rotation inférieur (AX2) au foyer inférieur (21) et une portion arrière inférieure (20") s'étendant en corde dudit foyer inférieur (21) au bord de fuite inférieur (23),
- ledit moyen de liaison (30) inclut une première liaison mécanique (31) reliant ladite portion avant inférieure (20') à ladite portion intermédiaire (15'), et une deuxième liaison mécanique (33) reliant ladite portion arrière inférieure (20") à ladite portion arrière supérieure (15").

9. Moyen de stabilisation selon l'une quelconque des revendications 1 à 8,
caractérisé en ce ledit axe de rotation supérieur (AX1) et à l'aplomb dudit axe de rotation inférieur (AX2).

10. Moyen de stabilisation selon la revendication 8,
**caractérisé en ce que** ladite première liaison (31) est liée audit bord d'attaque inférieur (22).

11. Moyen de stabilisation selon la revendication 8,
**caractérisé en ce que** ladite deuxième liaison (33) est liée audit bord de fuite supérieur (18).

12. Moyen de stabilisation selon l'une quelconque des revendications 1 à 11,
**caractérisé en ce que** :
- ledit axe de rotation supérieur (AX1) est agencé entre un foyer supérieur (16) d'application de variation d'efforts sur la surface de stabilisation supérieure (15) et un bord de fuite supérieur (18) de la surface de stabilisation supérieure (15), cet axe de rotation supérieur (AX1) étant situé à une première distance (D1) du foyer supérieur (16),
- ledit axe de rotation inférieur (AX2) est agencé entre un foyer inférieur (21) d'application de variation d'efforts sur la surface de stabilisation inférieure (20) et un bord d'attaque inférieur (22) de la surface de stabilisation inférieure (20), cet axe de rotation inférieur (AX2) étant situé à une deuxième distance (D2) du foyer inférieur (21),
- la surface de stabilisation supérieure (15) présente une première surface alaire (S1), et la surface de stabilisation inférieure (20) présente une deuxième surface alaire (S2),
- un premier quotient de la première distance (D1) et de la deuxième distance (D2) est égal à un deuxième quotient de la deuxième surface alaire (S2) et de la première surface alaire (S1).

13. Moyen de stabilisation selon la revendication 12,
**caractérisé en ce que** le premier quotient est compris entre 2 et 10.

14. Moyen de stabilisation selon l'une quelconque des revendications 1 à 13,
**caractérisé en ce que** ledit moyen de stabilisation comporte au moins une butée (100) pour limiter une rotation de la surface de stabilisation inférieure (20).

15. Aéronef (1) muni d'un fuselage (2) s'étendant longitudinalement d'un nez (3) vers une extrémité arrière (4), ledit aéronef (1) ayant une voilure tournante (5) portée par le fuselage (2) entre ledit nez (3) et ladite extrémité arrière (4), ledit aéronef (1) ayant un moyen de stabilisation (10) porté par ledit fuselage (2) entre ladite voilure tournante (5) et ladite extrémité arrière (4),
**caractérisé en ce que** ledit moyen de stabilisation (10) est selon l'une quelconque des revendications 1 à 14.

16. Aéronef selon la revendication 15,
**caractérisé en ce que** chaque surface de stabilisation est indifféremment soit traversante en traversant latéralement de part en part ledit fuselage, soit non traversante en s'étendant latéralement à partir dudit fuselage.

## Patentansprüche

1. Nickstabilisierungsmittel (10) mit einer oberen Stabilisierungsfläche (15) und einer unteren Stabilisierungsfläche (20), wobei die obere Stabilisierungsfläche (15) in einer oberen Ebene (P1) und die untere Stabilisierungsfläche (20) in einer unteren Ebene (P2) angeordnet sind, wobei die obere Ebene (P1) die untere Ebene (P2) überragt, **dadurch gekennzeichnet, dass** die obere Stabilisierungsfläche (15) um eine obere Drehachse (AX1) drehbar ist, und die untere Stabilisierungsfläche (20) um eine untere Drehachse (AX2) drehbar ist, wobei das Stabilisierungsmittel (10) ein Verbindungsmittel (30) aufweist, damit eine Drehbewegung einer Stabilisierungsfläche eine gleiche Drehbewegung der anderen Stabilisierungsfläche erzeugt, wobei ein oberer Punkt (16) zur Beaufschlagung der oberen Stabilisierungsfläche (15) mit Kraftänderungen zwischen der oberen Drehachse (AX 1) und einer oberen Anströmkante (17) der oberen Stabilisierungsfläche (15) angeordnet ist, und ein unterer Punkt (21) zur Beaufschlagung der unteren Stabilisierungsfläche (20) mit Kraftänderungen zwischen einer unteren Hinterkante (23) der unteren Stabilisierungsfläche (20) und der unteren Drehachse (AX2) angeordnet ist.

2. Stabilisierungsmittel nach Anspruch 1,
**dadurch gekennzeichnet, dass** das Stabilisierungsmittel ein oberes Beweglichkeitsmittel (40) aufweist, welches eine Drehbewegung der oberen Stabilisierungsfläche (15) um eine obere Drehachse (AX1) ermöglicht, und ein unteres Beweglichkeitsmittel (50), welches eine Drehbewegung der unteren Stabilisierungsfläche (20) um eine untere Drehachse (AX2) aufweist.

3. Stabilisierungsmittel nach Anspruch 2,
**dadurch gekennzeichnet, dass** mindestens ein Beweglichkeitsmittel eine mit der entsprechenden Stabilisierungsfläche fest verbundene Welle (41, 51) aufweist, wobei die Welle an einem Rumpf (2) eines Luftfahrzeugs anlenkbar ist.

4. Stabilisierungsmittel nach Anspruch 2,
**dadurch gekennzeichnet, dass** mindestens ein Beweglichkeitsmittel (40, 50) ein Rückholmittel (42, 52) der entsprechenden Stabilisierungsfläche aufweist, das bestrebt ist, diese Stabilisierungsfläche in einer stabilen Lage zu halten.

5. Stabilisierungsmittel nach Anspruch 4,
**dadurch gekennzeichnet, dass** das Rückholmittel (42, 52) ein Versteifungsmittel aufweist, welches eine vorbestimmte Drehsteifigkeit aufweist.

6. Stabilisierungsmittel nach einem der Ansprüche 1 bis 5,
**dadurch gekennzeichnet, dass** das Verbindungsmittel (30) mindestens eine mechanische Verbindung aufweist, die an der unteren Stabilisierungsfläche und an der oberen Stabilisierungsfläche angelenkt ist.

7. Stabilisierungsmittel nach Anspruch 6,
**dadurch gekennzeichnet, dass** die mechanische Verbindung gleich beabstandet von der oberen Drehachse und der unteren Drehachse angeordnet ist.

8. Stabilisierungsmittel nach einem der Ansprüche 1 bis 7,
**dadurch gekennzeichnet, dass**
- die obere Drehachse (AX1) zwischen dem oberen Punkt (16) der Beaufschlagung der oberen Stabilisierungsfläche (15) mit Kraftänderungen und einer Hinterkante (17) der oberen Stabilisierungsfläche (15) angeordnet ist, wobei die obere Stabilisierungsfläche (15) einen Zwischenbereich (15') aufweist, der sich von dem oberen Punkt (16) bis zu der oberen Drehachse (AX1) erstreckt, und einen hinteren oberen Bereich (15"), der sich von der oberen Drehachse (AX1) bis zu der oberen Hinterkante (18) erstreckt,
- die untere Drehachse (AX2) zwischen dem unteren Punkt (21) zur Beaufschlagung der unteren Stabilisierungsfläche (20) mit Kraftänderungen und einer unteren Anströmkante (22) der unteren Stabilisierungsfläche (20) angeordnet ist, wobei die untere Stabilisierungsfläche (20) einen vorderen unteren Bereich (20') aufweist, der sich von einer unteren Anströmkante (22) der unteren Stabilisierungsfläche (20) bis zur unteren Drehachse (AX2) erstreckt, sowie einen Zwischenabschnitt (20"'), der sich von der unteren Drehachse (AX2) bis zu dem unteren Punkt (21) erstreckt, sowie einen unteren hinteren Bereich (20"), der sich von dem unteren Punkt (21) zu der unteren Hinterkante (23) erstreckt,
- das Verbindungsmittel (30) eine erste mechanische Verbindung (31) aufweist, die den vorderen unteren Bereich (20') mit dem Zwischenbereich (15') verbindet, und wobei eine zweite mechanische Verbindung (33) den unteren hinteren Bereich (20") mit dem oberen hinteren Bereich (15") verbindet.

9. Stabilisierungsmittel nach einem der Ansprüche 1 bis 8,
**dadurch gekennzeichnet, dass** die obere Drehachse (AX1) über der unteren Drehachse (AX2) liegt.

10. Stabilisierungsmittel nach Anspruch 8,
**dadurch gekennzeichnet, dass** die erste Verbindung (31) mit der unteren Anströmkante (22) verbunden ist.

11. Stabilisierungsmittel nach Anspruch 8,
**dadurch gekennzeichnet, dass** die zweite Verbindung (33) mit der oberen Hinterkante (18) verbunden ist.

12. Stabilisierungsmittel nach einem der Ansprüche 1 bis 11,
**dadurch gekennzeichnet, dass**:
- die obere Drehachse (AX1) zwischen einem oberen Punkt (16) der Beaufschlagung der oberen Stabilisierungsfläche (15) mit Kraftänderungen und einer oberen Hinterkante (18) der oberen Stabilisierungsfläche (15) angeordnet ist, wobei diese obere Drehachse (AX1) in einem ersten Abstand (D1) von dem oberen Punkt (16) angeordnet ist,
- die untere Drehachse (AX2) zwischen einem unteren Punkt (21) der Beaufschlagung der unteren Stabilisierungsfläche (20) mit Kraftänderungen und einer unteren Anströmkante (22) der unteren Stabilisierungsfläche (20) angeordnet ist, wobei diese untere Drehachse (AX2) in einem zweiten Abstand (D2) von dem unteren Punkt (21) angeordnet ist,
- die obere Stabilisierungsfläche (15) eine erste Flügelfläche (S1) aufweist, und die untere Stabilisierungsfläche (20) eine zweite Flügelfläche (S2) aufweist,
- ein erster Quotient aus dem ersten Abstand (D1) und dem zweiten Abstand (D2) gleich einem zweiten Quotienten der zweiten Flügelfläche (S2) und der ersten Flügelfläche (S1) ist.

13. Stabilisierungsmittel nach Anspruch 12,
**dadurch gekennzeichnet, dass** der erste Quotient zwischen 2 und 10 liegt.

14. Stabilisierungsmittel nach einem der Ansprüche 1 bis 13,
**dadurch gekennzeichnet, dass** das Stabilisierungsmittel mindestens einen Anschlag (100) aufweist, um eine Drehung der unteren Stabilisierungsfläche (20) zu begrenzen.

15. Luftfahrzeug (1) mit einem Rumpf (2), der sich in Längsrichtung von einer Nase (3) bis zu einem hinteren Ende (4) erstreckt, wobei das Luftfahrzeug (1) Drehflügel (5) aufweist, die von dem Rumpf (2) zwischen der Nase (3) und dem hinteren Ende (4) getragen werden, wobei das Luftfahrzeug (1) ein Stabilisierungsmittel (10) aufweist, welches von dem Rumpf (2) getragen wird und zwischen dem Drehflügel (5) und dem hinteren Ende (4) angeordnet ist,
**dadurch gekennzeichnet, dass** das Stabilisierungsmittel (10) ein Stabilisierungsmittel nach einem der Ansprüche 1 bis 14 ist.

16. Luftfahrzeug nach Anspruch 15,
**dadurch gekennzeichnet, dass** jede Stabilisierungsfläche gleichermaßen durchquerend sein kann, indem sie seitlich den Rumpf von einer Seite zur anderen durchquert, oder nicht-durchquerend sein kann, indem sie sich seitlich, ausgehend von dem Rumpf, erstreckt.

## Claims

1. A pitch stabilisation means (10) provided with an upper stabilisation surface (15) and a lower stabilisation surface (20), said upper stabilisation surface (15) being located in an upper plane (P1), said lower stabilisation surface (20) being located in a lower plane (P2), the upper plane (P1) overhanging the lower plane (P2),
**characterised in that** the upper stabilisation surface (15) is mobile in rotation about an upper axis of rotation (AX1), said lower stabilisation surface (20) being mobile in rotation about a lower axis of rotation (AX2), the stabilisation means (10) having a linking means (30) so that a rotary movement of one stabilisation surface brings about an equal rotary movement of the other stabilisation surface, an upper aerodynamic centre (16) for the application of changes in forces of the upper stabilisation surface (15) being arranged between said upper axis of rotation (AX1) and an upper leading edge (17) of the upper stabilisation surface (15), a lower aerodynamic centre (21) for the application of changes in forces of the lower stabilisation surface (20) being arranged between a lower trailing edge (23) of the lower stabilisation surface (20) and the lower axis of rotation (AX2).

2. A stabilisation means according to Claim 1,
**characterised in that** the stabilisation means comprises an upper mobility means (40) which permits a rotary movement of said upper stabilisation surface (15) about an upper axis of rotation (AX1), and a lower mobility means (50) which permits a rotary movement of said lower stabilisation surface (20) about a lower axis of rotation (AX2).

3. A stabilisation means according to Claim 2,
**characterised in that** at least one mobility means comprises a shaft (41, 51) which is integral with the corresponding stabilisation surface, said shaft being suitable for being articulated to an aircraft fuselage (2).

4. A stabilisation means according to Claim 2,
**characterised in that** at least one mobility means (40, 50) comprises a return means (42, 52) for the corresponding stabilisation surface which tends to keep this stabilisation surface in a stable position.

5. A stabilisation means according to Claim 4,
**characterised in that** said return means (42, 52) comprises a stiffening means having a predetermined angular stiffness.

6. A stabilisation means according to any one of Claims 1 to 5,
**characterised in that** said linking means (30) includes at least one mechanical linkage which is articulated to the lower stabilisation surface and to the upper stabilisation surface.

7. A stabilisation means according to Claim 6,
**characterised in that** said mechanical linkage is located equidistant from the upper axis of rotation and from the lower axis of rotation.

8. A stabilisation means according to any one of Claims 1 to 7,
**characterised in that**:
- said upper axis of rotation (AX1) is arranged between the upper aerodynamic centre (16) for the application of changes in forces of the upper stabilisation surface (15) and an upper trailing edge (17) of the upper stabilisation surface (15), said upper stabilisation surface (15) comprising an intermediate portion (15') extending along a chord from said upper aerodynamic centre (16) to said upper axis of rotation (AX1) and an upper rear portion (15") extending along a chord from said upper axis of rotation (AX1) to the upper trailing edge (18),
- said lower axis of rotation (AX2) is arranged between the lower aerodynamic centre (21) for the application of changes in forces of the lower stabilisation surface (20) and a lower leading edge (22) of the lower stabilisation surface (20), said lower stabilisation surface (20) comprising a lower front portion (20') extending along a chord from a lower leading edge (22) of the lower stabilisation surface (20) to the lower axis of rotation (AX2), then an intermediate section (20"') extending along a chord from the lower axis of rotation (AX2) to the lower aerodynamic centre (21) and a lower rear portion (20") extending along a chord from said lower aerodynamic centre (21) to the lower trailing edge (23),
- said linking means (30) includes a first mechanical linkage (31) connecting said lower front portion (20') to said intermediate portion (15'), and a second mechanical linkage (33) connecting said lower rear portion (20") to said upper rear portion (15").

9. A stabilisation means according to any one of Claims 1 to 8,
**characterised in that** said upper axis of rotation (AX1) is directly above said lower axis of rotation (AX2).

10. A stabilisation means according to Claim 8,
**characterised in that** said first linkage (31) is linked to said lower leading edge (22).

11. A stabilisation means according to Claim 8,
**characterised in that** said second linkage (33) is linked to said upper trailing edge (18).

12. A stabilisation means according to any one of Claims 1 to 11,
**characterised in that**:
- said upper axis of rotation (AX1) is arranged between an upper aerodynamic centre (16) for the application of changes in forces to the upper stabilisation surface (15) and an upper trailing edge (18) of the upper stabilisation surface (15), this upper axis of rotation (AX1) being located at a first distance (D1) from the upper aerodynamic centre (16),
- said lower axis of rotation (AX2) is arranged between a lower aerodynamic centre (21) for the application of changes of forces to the lower stabilisation surface (20) and a lower leading edge (22) of the lower stabilisation surface (20), this lower axis of rotation (AX2) being located at a second distance (D2) from the lower aerodynamic centre (21),
- the upper stabilisation surface (15) has a first wing area (S1), and the lower stabilisation surface (20) has a second wing area (S2),
- a first quotient of the first distance (D1) and of the second distance (D2) is equal to a second quotient of the second wing area (S2) and of the first wing area (S1).

13. A stabilisation means according to Claim 12,
**characterised in that** the first quotient is between 2 and 10.

14. A stabilisation means according to any one of Claims 1 to 13,
**characterised in that** said stabilisation means comprises at least one abutment (100) for limiting rotation of the lower stabilisation surface (20).

15. An aircraft (1) provided with a fuselage (2) extending longitudinally from a nose (3) to a rear end (4), said aircraft (1) having a rotary wing (5) borne by the fuselage (2) between said nose (3) and said rear end (4), said aircraft (1) having a stabilisation means (10) borne by said fuselage (2) between said rotary wing (5) and said rear end (4), **characterised in that** said stabilisation means (10) is in accordance with any one of Claims 1 to 14.

16. An aircraft according to Claim 15,
**characterised in that** each stabilisation surface is equally well either traversing **in that** it passes laterally through said fuselage from side to side, or non-traversing **in that** it extends laterally from said fuselage.
